# FASCICULE DE BREVET EUROPEEN

(11) **EP 0 381 906 B1**
(45) Date de publication et mention de la délivrance du brevet: **24.02.1993**
(21) Numéro de dépôt: 89403646.6
(22) Date de dépôt: 22.12.1989
(51) Int. Cl.: F16B 5/07

(54) **Perfectionnement à un dispositif de jonctionnement de panneaux ou de réalisation de conduits**
Vorrichtung zur Verbindung von Platten oder der Erstellung von Rohren
Device for joining plates or manufacturing pipes

(30) Priorité: 12.01.1989 FR 8900307
(43) Date de publication de la demande: 16.08.1990
(73) Titulaire: CAOUTCHOUC MANUFACTURE ET PLASTIQUES, F-78000 Versailles (FR)
(72) Inventeur: Bechu, Jean-Pierre, F-92400 Courbevoie (FR)

(56) Documents cités:
- EP-A- 0 250 002
- DE-A- 1 915 098
- DE-B- 1 181 511
- DE-U- 7 516 421
- FR-A- 2 433 701

## Description

L'invention est relative au domaine des Travaux Publics, du Bâtiment et de diverses industries dans lesquelles sont recherchés des assemblages étanches de rives de panneaux souples ou la réalisation de canaux ou conduits assurant la protection de câbles et/ou de tuyaux, lesdits canaux ou conduits pouvant, éventuellement, être utilisés, par ailleurs, pour véhiculer des fluides.

Des dispositifs d'assemblage, par enclipsage d'une forme mâle dans un logement femelle, réalisés en profilés de grande longueur, sont décrits dans le document FR-A-2.565.301 de MICHEAU. La caractéristique en est un élément compressible porté par la forme mâle.
D'une manière similaire, les formes conjuguées de deux profilés permettent la fermeture, sur elles-mêmes, des extrémités d'une bande transporteuse, comme décrit dans le brevet FR-A-2.562.520 de AMCO.
Le verrouillage d'un profilé en élastomère, par une clé coextrudée, est proposé dans le brevet FR-A-2.431.644 d'HUTCHINSON MAPA.

Tous ces dispositifs utilisent deux profilés de formes conjugées, alors que des dispositifs utilisant un profilé unique pouvant s'enclipser sur lui-même sont connus, par exemple du document DE-U-75.16421 de RENTFLE, décrivant une bande flexible, portant des bossages, utilisable comme moyen d'assemblage entre éléments divers. Il en est de même dans le document EP-A-0.250.002 de MARQUET ayant pour objet un matériau cellulaire permettant de constituer des isolations thermiques, sous forme tubulaire, refermée par des dents souples s'engrenant symétriquement.
Entre autres dispositions, deux surfaces géométriquement identiques peuvent être imbriquées, soit sur un plan, pour la réalisation préférentielle d'une semelle de chaussure, comme décrit dans le document FR-A-2.264.209 d'ERAM, soit sous une forme tubulaire, pour l'isolation thermique de canalisations, selon le document DE-A-1.181.511 de LOEOEF.

Les dispositifs utilisant un profilé unique présentent, par rapport a ceux qui nécessitent deux profilés à formes conjuguées, l'avantage de la simplicité de fabrication et, par conséquent, celui d'un coût réduit.
Cependant, à l'avantage d'utiliser - dans un cas comme dans l'autre - des profilés déformables à bossages symétriquement imbriqués, s'oppose l'inconvénient - résultant de la déformabilité même nécessaire à l'enclipsage - c'est à dire une résistance très limitée à une traction transversale, qui amorce l'ouverture par flexion de la forme auto-serrante des saillies conjuguées aux évidements antagonistes.

En particulier, l'usage de tels profilés pour former des canaux ou conduits susceptibles de véhiculer un fluide, en limite l'usage à des fluides sous pression très réduite.

En effet, le déroulement transversal de la forme souple, constituée par l'assemblage des profilés serait immédiatement provoqué par une pression interne, même faible.

L'objectif de la présente invention est de remédier à cet inconvénient des dispositifs de l'art antérieur tout en conservant l'avantage de la facilité de fabrication d'un profilé unique et d'assemblage de deux de ses éléments.

L'objet de la présente invention est donc de permettre l'utilisation de deux éléments d'un profilé flexible, assemblés par emboîtement réciproque de saillies et d'évidements - au moins au nombre de deux - en particulier pour réaliser des canaux ou conduits de cables et de tuyaux résistant à une force de déroulement transversale et, plus particulièrement, des conduits de fluides résistant à une pression interne.
L'assemblage consiste en un verrouillage mécanique, souple et amovible, imposant un écartement constant aux saillies de l'un au moins des profilés, obtenu en ménageant une fente dans le talon de ce profilé au dos desdites saillies.

Après l'opération d'assemblage selon l'art antérieur, un dispositif d'écartement constant est engagé dans les fentes pour sécuriser cet assemblage par un dispositif qui reste souple à la flexion, perpendiculairement au plan générateur du profilé. Un tel dispositif peut être formé d'un autre profilé approprié, en matériau thermoformable mais non élastomérique, soit d'agraphes discontinues métalliques ou plastiques reliées entre elles par une bande de tissu ou par un élastomère renforcé de textiles, afin d'en permettre une manipulation aisée au montage comme au démontage.

L'invention consiste en un perfectionnement des dispositifs de jonctionnement de panneaux ou de réalisation de conduits, fabriqués à partir d'une composition polymérique souple, et composés d'au moins deux éléments emboîtables obtenus à partir d'une bande unique profilée qui comporte une succession de saillies longitudinales séparées par des évidements, dont l'assemblage en symétrie des éléments se fait par emboîtement réciproque des saillies de chaque élément dans les évidements correspondants de l'autre élément et dont au moins deux saillies comportent dans leur axe une fente ménagée du côté de la base, comme connu du document DE-U-7516421.

L'invention est caractérisée en ce qu'une ligne d'agrafes, insérée dans les fentes de saillies consécutives, vient verrouiller, après l'assemblage, la déformabilité qui a permis de réaliser celui-ci.

Les caractéristiques et variantes de l'invention seront mieux comprises à la lecture de la description accompagnant les dessins dans lesquels :
- La figure 1 représente la section droite d'un conduit souple constitué selon l'invention.
- La figure 2 représente une liaison multicanaux entre machines mobiles utilisant le dispositif objet de l'invention.
- La figure 3 est une vue perspective de la liaison montrée en section par la figure 2.
- La figure 4 décrit plusieurs moyens de réalisation du verrouillage, objet de l'invention.

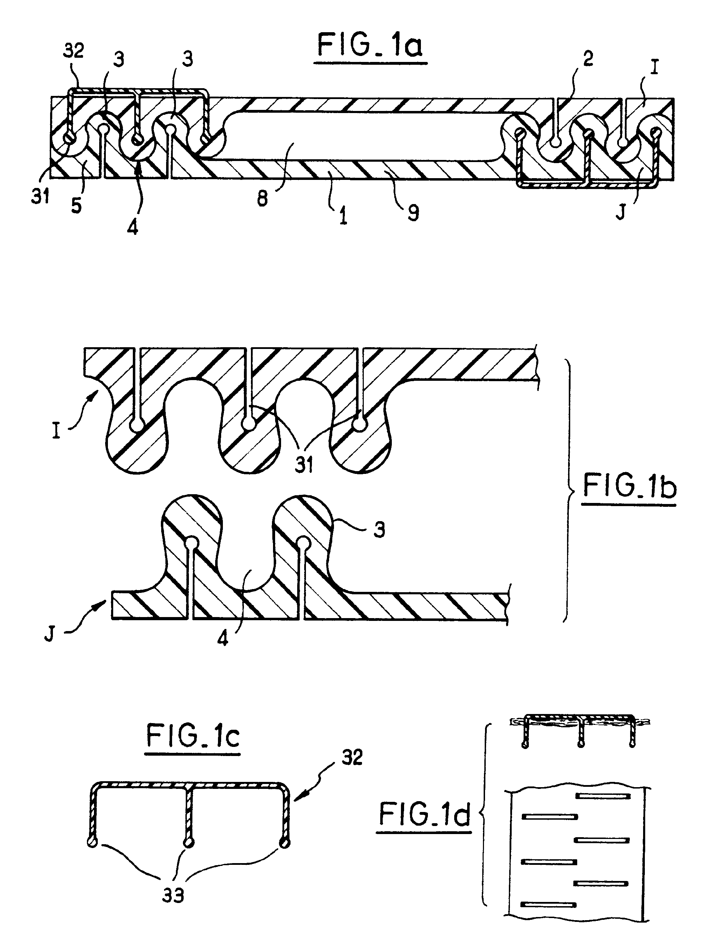

La figure 1 est une section droite d'un conduit souple constitué de l'assemblage face à face de deux profilés (I) et (J) obtenus à partir d'une bande unique profilée (1) qui comporte une base (2) terminée par des talons (5), au moins deux saillies (3) du profilé (I) s'engageant dans deux évidements (4) du profilé (J) et réciproquement, ceci se reproduisant de part et d'autre d'un conduit (8) constitué par les parois (9) prolongeant le talon (5).

La vue 1a représente l'ensemble après assemblage, 1a vue 1b avant la solidarisation.
Une fente (31), à légère dépouille inversée, c'est-à-dire se resserrant de l'intérieur vers la face externe, est ménagée au dos de chaque profilé.
Une pièce formant agrafe (32) vient engager la tête (33) de chacun de ses bras, ici représentes au nombre de trois, par un profil conjugué, dans chacune des fentes.
L'agrafe (32), représentée dans la vue 1c peut être constituée d'un profilé de section constante et assez souple car réalisé par boudinage d'un matériau thermoplastique ou bien d'un élastomère renforcé de fibres courtes. Elle peut, au contraire, être constituée de courtes longueurs (inférieures à la largeur de la section) d'un tel profilé tranché, reliées entre elles par une bande de tissu adhésif, ou quelques fils textiles, en nappe, collés au dos desdites agrafes de courte longueur. Elle peut, également, être formée de pièces métalliques à base de fils de section carrée ou de courtes sections de tôle, assemblées sur une bande de tissu textile ou une nappe formée de quelques fils textiles comme illustré sur la vue 1d.

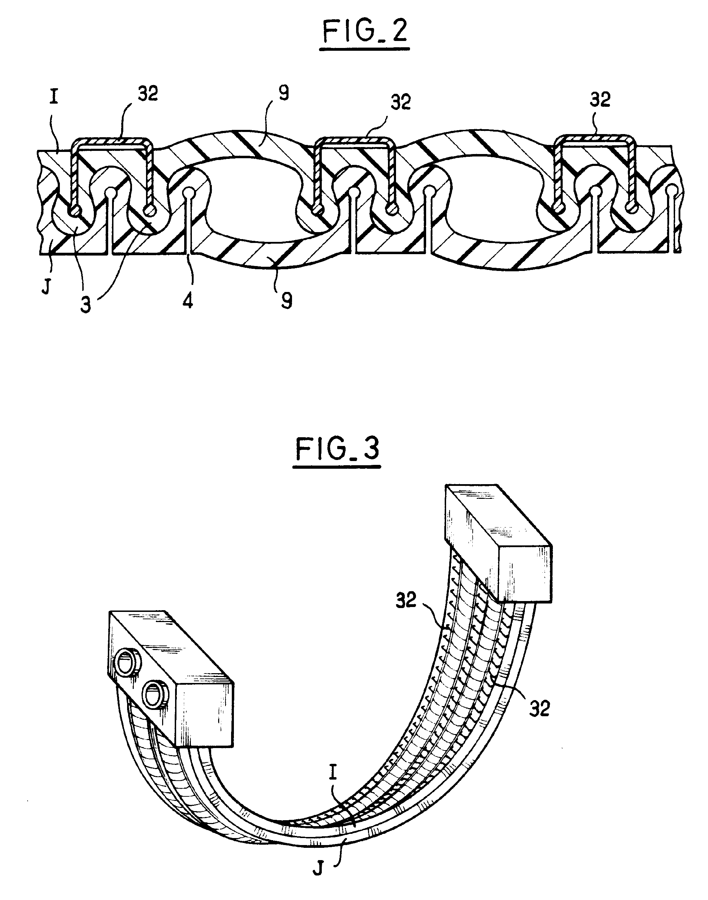

La figure 2 représente une nappe multicanaux formée par la juxtaposition de plusieurs éléments identiques à ceux de la figure 1. Ils sont représentés dans la position gonflée sous l'effet d'une pression interne non négligeable. Le verrouillage par les agrafes (32) qui empêchent les saillies (3) des profilés (I) et (J) de basculer, avec variation de leur écartement, a pour effet de maintenir, d'une part, la liaison mécanique entre les deux éléments, d'autre part, l'étanchéité entre ceux-ci, malgré la tension exercée sur les talons (5) par le gonflement des parois (9).

Le démontage, toujours aisé, de l'ensemble multicanaux, par exemple serti mécaniquement sur des embouts appropriés à chacune des extrêmités des profilés (I) et (J), se fait après enlèvement des verrous constitués par les agrafes (32), éventuellement sur un seul côté pour une modification, par exemple l'échange des câbles protégés à l'intérieur de l'un des conduits formés par ce profilé.

La figure 3 montre, en perspective, une utilisation de la liaison multicanaux plate représentée en section par la figure 2. Un usage fréquent, sur des machines mobiles ou par exemple entre véhicules attelés, aussi bien sur route que sur fer, a une forme de chaînette, comme représenté, prise par un élément pendant librement entre deux embouts de fixation et de communication.

Le procédé d'assemblage mécanique entre profilés, ainsi que le verrouillage par les agrafes (32), ne restreint pas la possibilité de courbure de chaque élément, avec microglissements entre eux, dans le sens de la chaînette, sans que soit limitée l'étanchéité, assurée par le contact entre au moins quatre surfaces des saillies (3) imbriquées deux à deux dans le face à face des profilés (I) et (J), dont la résistance à la courbure est faible avant assemblage et reste modérée après l'assemblage.

La courbure de l'ensemble, permise par une coupe à longueur différente avant le sertissage des embouts, peut être modifiée aisément tandis que se produit une friction entre éléments qui serait relativement amortissante, dans le cas par exemple de la liaison entre deux véhicules ou d'un chariot mobile sur une machine-outil.

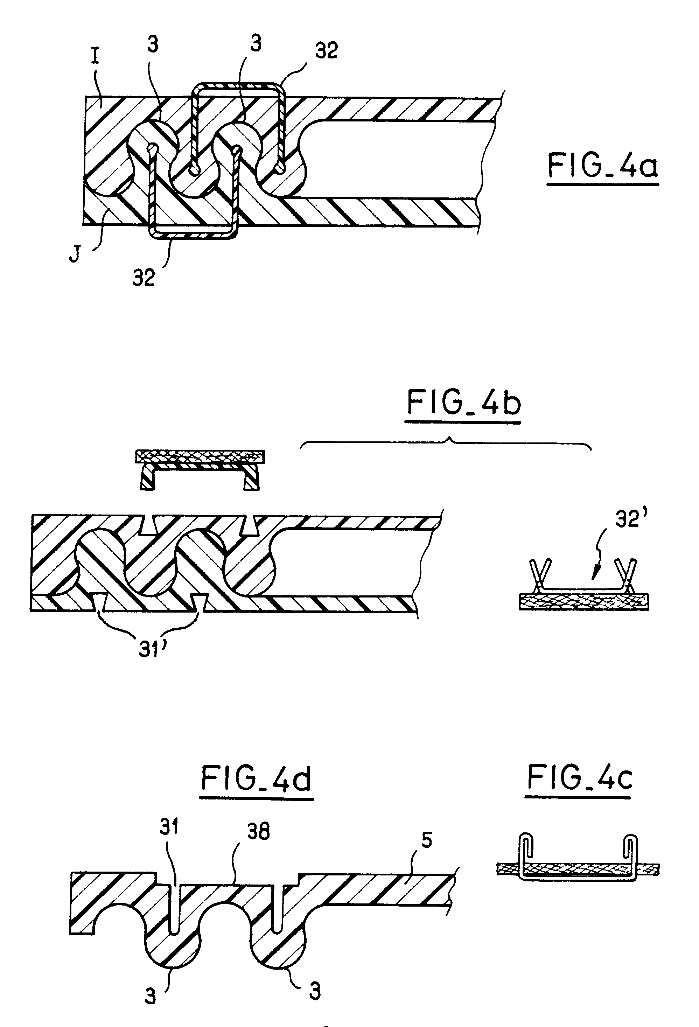

La figure 4 représente plusieurs réalisations matérielles du verrouillage par des agrafes (32). La vue 4a montre que deux verrouillages sont possibles, chacun sur une face de l'assemblage formé de profilés (I) et (J) face à face . Néammoins le parallèlisme, imposé par le verrouillage de deux saillies contigues (3), enfermant la tête de leur vis à vis, suffit à maintenir l'étanchéité et la solidarisation des canaux ainsi constitués et une seule ligne d'agrafage reste suffisante.

Chacun des profilés (I) et (J), pour des raisons de fabrication unique, porte sur la face opposée aux saillies (3) les fentes (31), ménagées dès le boudinage, et, facultativement, une dépression (38) représentée sur la vue 4d, destinée à encastrer les agrafes (32) dans l'épaisseur du talon (5), pour des raisons esthétiques ou de protection contre poussières ou accumulation de boue.

La solution dont la réalisation est représentée par la vue 4a utilise des profilés identiques pour les composants antagonistes (I) et (J), comportant de profondes fentes (31), à légère dépouille inversée, comme décrit en figure 1, qui procurent au profilé une grande flexibilité et facilitent l'assemblage avant la pose des agrafes (32), aussi bien que le démontage après la dépose de ces dernières. Mais leur section très découpée exige pour un maintien mécanique et une éventuelle étanchéité la présence d'une ligne d'agrafes (32) sur le dos de chacun des profilés (I) et (J).

Une variante est représentée par la vue 4b, où les saillies (3) conservent leur raideur propre grâce à une faible profondeur des rainures (31′), avec des agrafes (32′) de faible hauteur par rapport à leur largeur (ou entraxe des saillies), ce qui n'affaiblit pas la partie la plus étroite de ces saillies (3). Pour un bon maintien de celle-ci, une dépouille notable est nécessaire, conférant aux rainures (31′) une allure trapézoïdale que le procédé de fabrication par boudinage n'exclut pas. Les agrafes (32′) devront avoir une section correspondante, que permet un double pliage comme représenté en vue 4c, ou bien des formes alternativement trop ouvertes et trop fermées qui sont montrées en vue 4b.

La vue 4d montre une variante facultative permettant d'encastrer au niveau de la face extérieure du talon (5), grâce à une dépression (38), l'alignement d'agrafes (32), de façon qu'elles ne dépassent pas géométriquement du profilé, soit sur une face (I), soit sur les deux faces (I) et (J).

En résumé, l'invention apporte, suivant plusieurs variantes, une possibilité de blocage, de tenue mécanique supérieure et éventuellement plus facile à rendre étanche que les profilés à bossages et emboîtement réciproque de saillies et d'évidements de l'art antérieur.

Elle permet la réalisation de conduits à canaux multiples par assemblage de deux éléments, réalisés en bandes plates, et l'usage de ceux-ci comme gaine de protection de tuyaux pneumatiques ou de câbles électriques mais aussi comme canaux, par eux-mêmes, conduisant air ou gaz sous pression modérée. Elle est surtout intéressante lors de la constitution de nappes en forme de chaînette, entre deux points mobiles, comme une liaison entre véhicules ou chariot mobile de machine lorsque plusieurs conduits et conducteurs parallèles recoivent le même déplacement.

## Revendications

1. Dispositif de jonctionnement de panneaux ou de réalisation de conduits, fabriqué à partir d'une composition polymérique souple, composé d'au moins deux éléments (I) et (J), emboîtables, obtenus à partir d'une bande unique profilée qui comporte une succession de saillies longitudinales (3), séparées par des évidements (4), l'assemblage en symétrie des éléments (I) et (J) se faisant par emboîtement réciproque des saillies (3) de chaque élément dans les évidements (4) correspondants de l'autre élément, et dont au moins deux saillies (3) comportent dans leur axe une fente (31), ménagée du côté de la base (1), caractérisé en ce qu'une ligne d'agrafes (32), insérée dans les fentes (31) de saillies (3) consécutives, vient verrouiller, après l'assemblage, la déformabilité qui a permis de réaliser ledit assemblage.

2. Conduit à canaux multiples (8) réalisé par un dispositif de jonctionnement, conformément à la revendication 1, caractérisé en ce qu'une ligne d'agrafes (32), insérée dans les fentes (31) de saillies (3) consécutives, vient assurer, par verrouillage après l'assemblage, la liaison mécanique et l'étanchéité entre les deux éléments (I) et (J).

3. Gaine de protection de câbles électriques disposés à l'intérieur de conduits (8), à canal unique ou à canaux multiples, réalisés par un dispositif de jonctionnement, conformément à la revendication 1, caractérisée en ce qu'une ligne d'agrafes (32), insérée dans les fentes (31) de deux saillies consécutives, vient assurer, par verrouillage après l'assemblage, la liaison mécanique entre les deux éléments (I) et (J) sans restreindre leur possibilité de courbure.

## Patentansprüche

1. Vorrichtung zum Verbinden von Platten miteinander oder zum Bilden von Schächten, die ausgehend von einer biegsamen Polymerverbindung hergestellt, aus mindestens zwei zusammensteckbaren Elementen (I) und (J) zusammengesetzt ist, welche ausgehend von einem einzigen profilierten Streifen, der eine Folge von durch Ausnehmungen (4) voneinander getrennten Längsansätzen (3) aufweist, erhalten werden, wobei das dekkungsgleiche Zusammenfügen der Elemente (I) und (J) durch gegenseitiges Einstecken der Ansätze (3) jeweils eines Elementes in die entsprechenden Ausnehmungen (4) des anderen Elementes erfolgt und wobei wenigstens zwei der Ansätze (3) längs ihrer Achse einen von der Seite der Basis (1) her ausgebildeten Schlitz (31) aufweisen, dadurch gekennzeichnet, daß ein Streifen von in die Schlitze (31) aufeinanderfolgender Ansätze (3) eingesetzter Klammern (32) nach dem Zusammenfügen die Deformierbarkeit blockiert, welche die Ausführung des Zusammenfügens ermöglicht hat.

2. Schacht mit mehreren Kanälen (8), gebildet durch eine Vorrichtung zum Verbinden nach Anspruch 1, dadurch gekennzeichnet, daß ein Streifen von in die Schlitze (31) aufeinanderfolgender Ansätze (3) eingesetzter Klammern (32) durch Blockierung nach dem Zusammenfügen die mechanische Verbindung und die Dichtigkeit zwischen den beiden Elementen (I) und (J) sicherstellt.

3. Schutzhülle für im Inneren von Schächten (8) mit einem oder mehreren Kanälen angeordnete elektrische Kabel, gebildet durch eine Vorrichtung zum Verbinden nach Anspruch 1, dadurch gekennzeichnet, daß ein Streifen von in die Schlitze (31) zweier aufeinanderfolgender Ansätze eingesetzter Klammern (32) durch Blockierung nach dem Zusammenfügen die mechanische Verbindung zwischen den beiden Elementen (I) und (J) sichert, ohne deren Biegsamkeit einzuschränken.

## Claims

1. A device for joining panels or for the creation of pipes, manufactured from a flexible polymeric composition, composed of at least two elements (I) and (J), which are able to be fitted into each other, obtained from a single profiled strip which comprises a series of longitudinal projections (3), separated by recesses (4), the assembly in symmetry of the elements (I) and (J) being carried out by reciprocal fitting of the projections (3) of each element in the corresponding recesses (4) of the other element, at least two of which projections (3) comprise in their axis a slit (31), arranged on the side of the base (1), characterised in that a line of fasteners (32), inserted in the slits (31) of consecutive projections (3) come to lock, after assembly, the deformability which has allowed said assembly to be created.

2. A pipe having multiple channels (8), created by a joining device, according to Claim 1, characterised in that a line of fasteners (32), inserted in the slits (31) of consecutive projections (3), comes to ensure, by locking after assembly, the mechanical connection and tightness between the two elements (I) and (J).

3. A protective sheath for electrical cables arranged inside pipes (8), having a single channel or multiple channels, created by a joining device, according to Claim 1, characterised in that a line of fasteners (32), inserted in the slits (31) of two consecutive projections, comes to ensure, by locking after assembly, the mechanical connection between the two elements (I) and (J) without restricting their possibility of curvature.
